**Europäisches Patentamt**

**European Patent Office**

**Office européen des brevets**

(19)

(11) Publication number : **0 441 350 B1**

(12) # EUROPEAN PATENT SPECIFICATION

(45) Date of publication of patent specification :
09.08.95 Bulletin 95/32

(51) Int. Cl.$^6$ : **G02B 27/00, G02B 26/10**

(21) Application number : **91101617.8**

(22) Date of filing : **06.02.91**

(54) **Optical system for light beam scanning.**

(30) Priority : **07.02.90 JP 27381/90**

(43) Date of publication of application :
**14.08.91 Bulletin 91/33**

(45) Publication of the grant of the patent :
**09.08.95 Bulletin 95/32**

(84) Designated Contracting States :
**DE FR GB IT**

(56) References cited :
**EP-A- 0 121 033**
**DE-A- 3 207 468**
**DE-A- 3 238 665**
**US-A- 4 866 459**

(73) Proprietor : **CANON KABUSHIKI KAISHA**
**30-2, 3-chome, Shimomaruko,**
**Ohta-ku**
**Tokyo (JP)**

(72) Inventor : **Kondo, Kazuyuki**
**c/o Canon Kabushiki Kaisha,**
**30-2, 3-chome**
**Shimomaruko, Ohta-ku, Tokyo (JP)**

(74) Representative : **Tiedtke, Harro, Dipl.-Ing. et al**
**Patentanwaltsbüro**
**Tiedtke-Bühling-Kinne & Partner**
**Bavariaring 4**
**D-80336 München (DE)**

EP 0 441 350 B1

## Description

The present invention relates to an optical system for light beam scanning according to the preamble part of patent claim 1, adapted for use in a laser beam printer, a digital copying machine or the like. Such optical scanning systems are known e.g. from DE-A-3 238 665, DE-A-3 207 468 and US-A-4 866 459.

Conventional optical systems for such light beam scanning generally utilize light beam deflection by a rotary polygon mirror, as disclosed in the U.S. Patent No. 4,379,612. If the reflecting faces of such polygon mirror involve an angular error (face inclination) with respect to the rotary axis, the light beam in scanning motion is displaced to undesirably influence the final image output. In order to avoid such undesirable influence of the face inclination, there is already proposed, as described in the above-mentioned patent, to place the rotary polygon mirror and the scanned plane (irradiated plane) in a optically conjugate relationship by means of a toric lens. It is also proposed, as described in the U.S. Patent No. 4,639,072, to alleviate the influence of the face inclination by positioning a cylindrical lens in the vicinity of the plane scanned by the light beam.

However, in the above-mentioned structure employing a toric lens, in order to correct the aberrations for maintaining desired optical performance, the toric lens has to be close to a plano-convex lens in the shape in the main scanning cross-sectional plane, and a spherical concave lens positioned between the toric lens and the rotary polygon mirror has to be close to a plano-concave or biconcave shape, so that the image angle is inevitably limited. Stated differently, a wider image angle with same optical performance will inevitably require thicker lenses, and as a result, the apparatus will become large.

Also it is generally difficult to manufacture the toric lens, and the use of the toric lens, is a factor of increased cost.

In order to avoid such drawbacks, there can be conceived to prepare the toric lens with a plastic material, but, since said toric lens represents a significant portion in the power of the entire conventional optical system consisting of a concave spherical lens and a convex toric lens from the side of the rotary polygon mirror, the power fluctuation in the plastic lens resulting from changes in ambient conditions is not negligible and results for example in a defocus on the scanned plane.

On the other hand, the other conventional structure utilizing the cylindrical lens in the vicinity of the scanned plane is less affected by the ambient conditions, but the presence of such optical component as the cylindrical lens close to a photosensitive drum is undesirable, for example in an electrophotographic laser beam printer, because various process components such as the developing unit and the cleaning station are positioned close to the photosensitive drum. Also such cylindrical lens, if positioned close to the photosensitive drum, is apt to be subjected to undesirable influence by stain with toner, heat, ozone etc.

In consideration of the foregoing, the object of the present invention is to provide an optical system for light beam scanning, excellent in performance, widening of image angle, compactization, resistance to fluctuation in ambient conditions, and cost.

The above-mentioned object can be attained, according to the present invention, by a scanning optical system, for use in a light beam scanning device for deflecting a light beam by deflection means (for example a rotary polygon mirror) thereby scanning a plane (for example a photosensitive drum) and to be positioned between said deflection means and said scanned plane, said optical system being composed of a spherical lens with a positive power and a toric lens positioned close to a face of said spherical lens, facing said scanned plane, and having positive powers both in the main and sub scanning cross sections, wherein at least a face of said toric lens in the main scanning cross section is aspherical. said toric lens is so designed to satisfy the following relations:

$$0.1 < f_a/f_{2a} < 0.3$$
$$0.25 < f_{2b}/f_a < 0.5$$
$$0.6 < \ell/f_a < 1$$
$$0 < d_{max}/f_{2b} < 0.15$$

wherein $f_{2a}$ is the focal length of the toric lens in the main scanning cross section; $f_{2b}$ is the focal length of the toric lens in the sub scanning cross section; $f_a$ is the synthesized focal length of the spherical lens and the toric lens in the main scanning cross section; $\ell$ is the distance between the toric lens and the scanned plane; and $d_{max}$ is the maximum thickness of the toric lens in the optical axis.

More specifically, said spherical lens is approximately planar in a face thereof closer to the deflection means, and is convex in the other face closer to the scanned plane. The toric lens has a concentric shape, having the center of radius of curvature at a side closer to the deflection means.

The toric lens may be composed for example of a plastic material, and, among the four conditions mentioned above, the latter two are important in forming the toric lens with a plastic material.

Preferred embodiments of the invention are described below with reference to the drawings in which:

Fig. 1 is a view of a first embodiment of the present invention in the main scanning plane thereof;

Fig. 2 is a view of the first embodiment of the present invention in the sub scanning plane thereof;

Fig. 3 is an aberration chart of the image plane curvature of the first embodiment;

Fig. 4 is an aberration chart showing the f-θ characteristics of the first embodiment;

Fig. 5 is a view of a second embodiment; and

Fig. 6 is a view of a third embodiment.

Now the present invention will be clarified in detail by preferred embodiments thereof shown in the attached drawings.

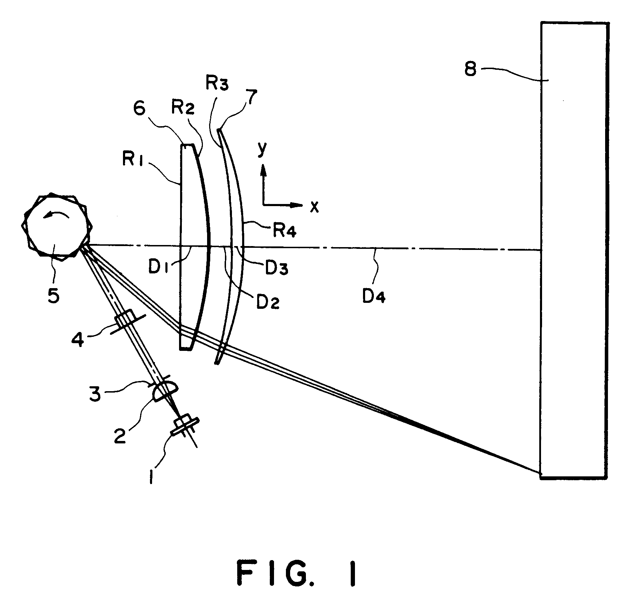

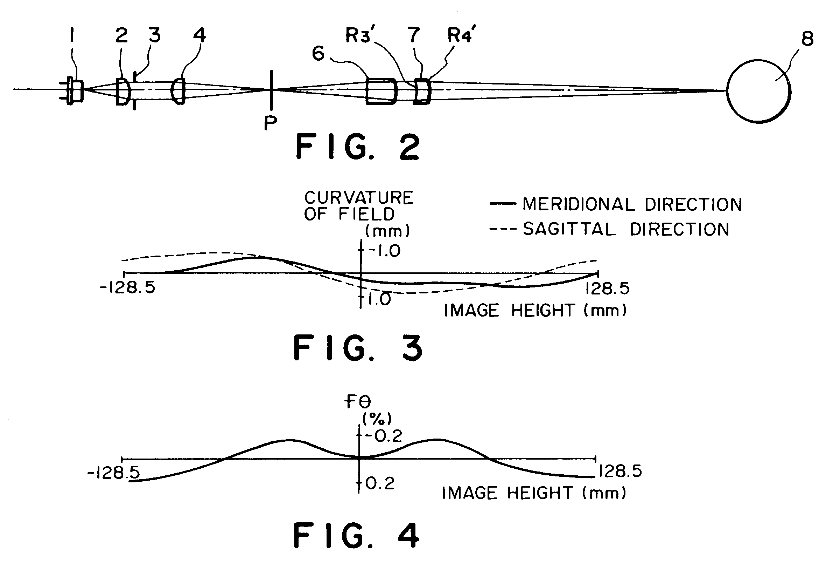

Figs. 1 and 2 illustrate a first embodiment of the present invention, respectively in the main scanning cross-sectional plane and in the sub scanning cross-sectional plane including the optical axis and perpendicular to the main scanning plane.

Referring to Fig. 1, a light beam emitted by a semiconductor laser 1 is converted into a substantially parallel beam by a collimating lens 2, then is shaped in the size of cross-section by a diaphragm aperture 3 and enters a cylindrical lens 4. As said cylindrical lens 4 has a power in the sub scanning cross section but is powerless in the main scanning cross section, the light beam enters a rotary polygon mirror 5 maintaining the parallel beam state in the main scanning cross section but being focused in a line in the sub scanning cross section. The rotary polygon mirror 5 is rotated at a constant high speed in a direction indicated by an arrow, so that the incident light beam is deflected by reflection by said mirror and put into a scanning motion in the main scanning plane.

The light beam deflected with a constant angular velocity passes through a spherical lens 6 of a positive power and a toric lens 7 having positive powers both in the main and sub scanning cross sections, and is focused on a photosensitive drum 8, achieving a linear scanning motion with a substantially constant speed.

Referring to Fig. 2, P indicates the position of reflecting face of the rotary polygon mirror 5, and, in the sub scanning cross section, the light beam substantially converges on this point P as explained above. Since the reflecting face P and the photosensitive drum 8 are optically substantially conjugate, the light beam can be focused on the same scanning line on the photosensitive drum 8 even if the reflecting face P involves an angular error (face inclination) in the sub scanning cross sectional plane. Thus provided is a compensating system for the face inclination of the rotary polygon mirror 5.

In the above-explained structure, the scanning lenses 6, 7 are constructed in the following manner, for realizing satisfactory image plane curvature and f-θ characteristics over a wide image angle in the main scanning plane.

At first, in the spherical lens 6 of positive power, the face positioned closer to the rotary polygon mirror 5 is formed almost planar, in order to generate a negative distortion for realizing satisfactory f-θ characteristics. The face positioned closer to the photosensitive drum is formed convex thereto, in order to satisfactorily correct the image plane curvature.

The toric lens 7 is positioned behind and close to the spherical lens 6, and has a concentric shape (centers of radii of curvature of both faces of said toric lens 7 being positioned at the side of the rotary polygon mirror and mutually close) in which at least one of the faces is aspherical in the main scanning cross sectional plane, in order to correct the curvature of image plane over a wide image angle. Besides, since well-balanced corrections of the f-θ characteristics and the image plane curvature in the scanning direction or in the meridional direction become difficult in case of an excessive power of the toric lens 7 in the main-scanning cross sectional plane, said power is so reduced as to satisfy a condition $0.1 < f_a/f_{2a} < 0.3$, wherein $f_{2a}$ is the focal length of the toric lens in the main scanning cross sectional plane while $f_a$ is the synthesized focal length of the spherical lens 6 and the toric lens 7 in said plane.

More specifically, if below the lower limit (i.e. $f_{2a} > 10 f_a$), the correction of aberrations is made easier but the toric lens 7 is positioned closer to the scanned plane (photosensitive drum 8) and becomes inevitably large. On the other hand, if above the upper limit (i.e. $f_{2a} < 3.333.. \times f_a$), a smaller value of $f_{2a}$ is favorable for compactization of the apparatus but renders it difficult to correct the f-θ characteristics and the image plane curvature in well balanced manner.

On the other hand, the focal length $f_{2b}$ of the toric lens 7 in the sub scanning cross sectional plane is so selected as to satisfy a condition $0.25 < f_{2b}/f_a < 0.5$ in order to satisfactorily correct the image plane curvature in the sagittal direction (perpendicular direction to the optical axis in the sub scanning cross sectional plane).

Above the upper limit of said condition (i.e. $f_{2b} > 0.5f_a$), $f_{2b}$ becomes larger, thus facilitating the correction of aberrations but the toric lens 7 is undesirably positioned closer to the scanned plane (photosensitive drum 8) as in the aforementioned conventional structure. Also below the lower limit (i.e. $f_{2b} < 0.25f_a$), $f_{2b}$ becomes smaller, rendering it difficult to achieve balanced corrections of the image plane curvature in the meridional and sagittal directions.

Furthermore, the toric lens 7 is so positioned as to satisfy a relation $0.6 < \ell/f_a < 1$ wherein $\ell$ is the distance between the toric lens 7 and the scanned plane. Below the lower limit (i.e. $\ell < 0.6f_a$), the apparatus becomes

bulky and the effect for compensating the face inclination becomes limited. On the other hand, above the upper limit (i.e. $\ell > f_a$) the toric lens 7 will have a stronger power, and there will result an untolerable defocus on the scanned plane, for example due to changes in the ambient conditions, particularly when the toric lens 7 is formed by a plastic material in consideration of the cost.

Furthermore, the toric lens 7 is formed so thin as to satisfy a condition $0 < d_{max}/f_{2b} < 0.15$, wherein $d_{max}$ is the maximum axial thickness of the toric lens. This condition reduces the defocus on the scanned plane, resulting from changes in ambient conditions, particularly moisture absorption of the toric lens 7, and facilitates the molding thereof with a plastic material.

As explained in the foregoing, the use of a thin toric lens of a relatively weak power, including an aspherical face, allows to obtain an inexpensive scanning optical system showing satisfactory performance over a wide image angle and little affected by changes in the ambient conditions even when the toric lens is molded with a plastic material.

Figs. 3 and 4 show the image plane curvature and the f-θ characteristics of the first embodiment, in which the spherical lens with positive power is composed of glass while the toric lens of positive power is composed of a plastic material.

In the following there is given a specific numerical example of the first embodiment:

$$\text{Focal length of entire system} \quad 184 \text{ mm}$$

$$\text{Maximum scanning angle} \quad 80°$$

$$\text{Deflection point} - R_1 \text{ plane} \quad 54.6 \text{ mm}$$

$$R_1 = \infty \qquad\qquad D_1 = 16.7$$

$$N_1 = 1.78569$$

$$R_2 = -181.29 \qquad D_2 = 12.1$$

$$R_3 = -575.78 \qquad D_3 = 6.8$$

$$N_3 = 1.51920$$

$$B = -4.06691 \times 10^{-7}$$

$$C = 4.54821 \times 10^{-11}$$

$$D = -9.52776 \times 10^{-16}$$

$$R_3' = -22.26$$

$$R_4 = -247.28 \qquad D_4 = 170.8$$

$$B = -3.45955 \times 10^{-7}$$

$$C = 3.00766 \times 10^{-11}$$

$$D = 5.63771 \times 10^{-16}$$

$$R_4' = -15.10$$

wherein $R_1$ - $R_4$ are radii of curvature of the lens faces in the main scanning cross sectional plane, in the order from the side of rotary polygon mirror 5 as shown in Figs. 1 and 2; $R_3'$ and $R_4'$ are radii of curvature in the sub scanning cross sectional plane; $D_1$ - $D_4$ are distances between lens faces; $N_1$ and $N_2$ are refractive indexes at 780 nm of the lenses in the order from the side of the rotary polygon mirror 5; and B - D are aspherical coefficients in the following relation between the height y and distance x of the lens face on the x-y plane:

$$x = y^2/R[1 + \{1 - (y/R)^2\}^{1/2}] + By^4 + Cy^6 + Dy^8 + \cdots$$

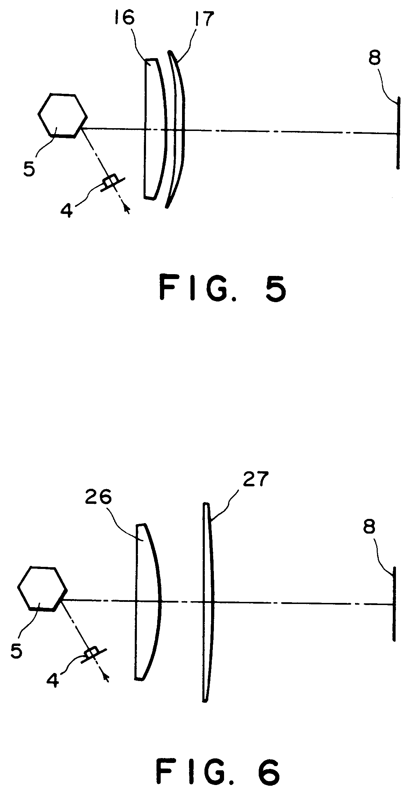

Fig. 5 shows a second embodiment of the scanning optical system in the main scanning cross sectional plane, of which numerical example is given in the following. The spherical lens of positive power is composed of glass, while the toric lens of positive power is composed of a plastic material.

The aspherical face of the toric lens 17, positioned closer to the spherical lens 16, is formed almost planar in a portion close to the optical axis. The symbols are defined same as in the foregoing numerical example.

Focal length of entire system    184 mm

Maximum scanning angle          80°

Deflection point – $R_1$ plane      51 mm

$R_1 = \infty$                           $D_1 = 17.7$

$N_1 = 1.78569$

$R_2 = -193.95$             $D_2 = 8.0$

$R_3 = -1479.75$         $D_3 = 6.9$

$N_3 = 1.51920$

$B = -4.35513 \times 10^{-7}$

$C = 2.88834 \times 10^{-11}$

$D = -1.51643 \times 10^{-15}$

$R_3{}' = -23.00$

$R_4 = -286.29$             $D_4 = 174.4$

$B = -3.59684 \times 10^{-7}$

$C = 1.25611 \times 10^{-11}$

$D = -6.52037 \times 10^{-16}$

$R_4{}' = -14.95$

Fig. 6 shows a third embodiment of the scanning optical system in the main scanning cross sectional plane, of which numerical example is given in the following. The spherical lens of positive power is composed of glass, while the toric lens of positive power is composed of a plastic material. In said third embodiment, the toric lens 27 is aspherical only in one face (positioned closer to the spherical lens 26) thereof.

```
Focal length of entire system      184 mm

Maximum scanning angle              80°

Deflection point - R₁ plane         60.1 mm
```

$$R_1 = \infty \qquad\qquad\qquad D_1 = 20.1$$

$$N_1 = 1.78569$$

$$R_2 = -160.70 \qquad\qquad D_2 = 35.1$$

$$R_3 = 3576.64 \qquad\qquad D_3 = 7.8$$

$$N_3 = 1.48595$$

$$B = -2.48657 \times 10^{-7}$$

$$C = 3.10118 \times 10^{-13}$$

$$D = 0$$

$$R_3' = -18.96$$

$$R_4 = -900.03 \qquad\qquad D_4 = 146.6$$

$$B = 0$$

$$C = 0$$

$$D = 0$$

$$R_4' = -14.11$$

As explained in the foregoing, a scanning optical system, for use in a light beam scanning device for deflecting a light beam by deflection means thereby scanning a plane and to be positioned between said deflection means and said scanned plane, is constructed according to the present invention by a spherical lens of a positive power and a toric lens positioned close to said spherical lens at a side thereof closer to the scanned plane and having positive powers both in the main and sub scanning cross sectional planes, wherein at least a face of said toric lens is formed aspherical, thereby achieving high optical performance while compensating the eventual face inclination error in the rotary polygon mirror. Also the scanning optical system can be obtained inexpensively by forming the toric lens with a plastic material.

## Claims

1. An optical scanning system, for use in a light beams scanning device for deflecting a light beam by deflection means (5) thereby scanning a plane (8) and to be positioned between said deflection means and said scanned plane, comprising:

a spherical lens (6, 16, 26) with a positive power; and

a toric lens (7, 17, 27) positioned close to said spherical lens at the side thereof closer to the scanned plane and having positive powers both in the main and sub scanning cross sectional planes, characterized in that at least one of the faces of said toric lens is aspherical in the main scanning cross sectional plane;

and that it satisfies the following relations:

$$0.1 < f_a/f_{2a} < 0.3;$$
$$0.25 < f_{2b}/f_a < 0.5;$$

$$0.6 < \ell/f_a < 1 ;$$
$$0 < d_{max}/f_{2b} < 0.15,$$

wherein $f_{2a}$ is the focal length of said toric lens in the main scanning cross sectional plane, $f_a$ is the synthesized focal length of said spherical and torical lenses in said plane, $f_{2b}$ is the focal length of said toric lens in the sub scanning cross sectional plane, $\ell$ is the distance between said toric lens and said scanned plane, and $d_{max}$ is the maximum thickness of said toric lens in the direction of the optical axis.

2.	An optical system according to claim 1, characterized in that said spherical lens is approximately planar in a face thereof closer to the deflection means, and is convex to the scanned plane in a face thereof closer to said scanned plane.

3.	An optical system according to one of claims 1-2 characterized in that said toric lens has a concentric shape with centers of radii of curvature at the side thereof close to the deflection means.

4.	An optical system according to one of claims 1-3, characterized in that said toric lens is composed of a plastic material.

5.	An optical system according to one of claims 1-4, characterized in that both faces of said toric lens are aspherical.

6.	An optical system according to one of claims 1-4, characterized in that only the face of said toric lens facing the spherical lens is aspherical.

7.	An optical system according to one of claim 1-6, characterized in that said spherical lens is made of a glass material and said toric lens is made of a plastic material.

8.	An optical scanning system comprising:
	a light source unit (1); and
	a light deflector (5) for deflecting a light beam from said light source unit,
	**characterized in that** it further comprises
	an optical scanning system as defined in any of claims 1 to 7 for guiding the light beam deflected by said light deflector to a surface (8) to be scanned.

9.	A laser beam printer comprising
	a light source unit (1);
	a light deflector (5) for deflecting a light beam from said light source unit; and
	a recording medium (8);
	**characterized in that** it further comprises
	an optical scanning system as defined in one of claims 1 - 7 for guiding the light beam deflected by said light deflector to said recording medium.


**Patentansprüche**

1.	Optische Abtastsystem zur Verwendung in einer Lichtstrahl-Abtastvorrichtung zum Ablenken eines Lichtstrahls durch Ablenkeinrichtungen (5), wodurch eine Ebene (8) abgetastet wird, und das zwischen der Ablenkeinrichtung und der abgetasteten Ebene anzuordnen ist, umfassend:
	eine sphärische Linse (6, 16, 26) mit einer positiven Kraft; und
	eine torische Linse (7, 17, 27), die sich nahe der sphärischen Linse an deren Seite, die dichter an der abgetasteten Ebene liegt, befindet und positive Kraft sowohl in der Haupt- als auch der Neben-Abtastquerschnittsebene hat, **dadurch gekennzeichnet, daß**
	mindestens eine der Flächen der torischen Linse in der Haupt-Abtastquerschnittsebene asphärisch ist; und daß sie den folgenden Beziehungen genügt:
$$0,1 < f_a/f_{2a} < 0,3;$$
$$0,25 < f_{2b}/f_a < 0,5;$$
$$0,6 < \ell/f_a < 1 ;$$
$$0 < d_{max}/f_{2b} < 0,15,$$
	wobei $f_{2a}$ die Brennweite der torischen Linse in der Haupt-Abtastquerschnittsebene ist, $f_a$ die zusammen-

gesetzte Brennweite der sphärischen und torischen Linsen in der Ebene ist, $f_{2b}$ die Brennweite der torischen Linse in der Neben-Abtastquerschnittsebene ist, $\ell$ der Abstand zwischen der torischen Linse und der abgetasteten Ebene ist und $d_{max}$ die maximale Dicke der torischen Linse in der Richtung der optischen Achse ist.

2. Optisches System nach Anspruch 1, dadurch gekennzeichnet, daß die sphärische Linse in ihrer Oberfläche, die dichter an der Ablenkeinrichtung liegt, annähernd planar ist und in ihrer Oberfläche, die dichter an der abgetasteten Ebene liegt, konvex zu der abgetasteten Ebene ist.

3. Optisches System nach einem der Ansprüche 1 bis 2, dadurch gekennzeichnet, daß die torische Linse eine konzentrische Form hat, wobei die Mittelpunkte der Krümmungsradien an ihrer Seite nahe der Ablenkeinrichtung liegen.

4. Optisches System nach einem der Ansprüche 1 bis 3, dadurch gekennzeichnet, daß die torische Linse aus einem Kunststoffmaterial zusammengesetzt ist.

5. Optisches System nach einem der Ansprüche 1 bis 4, dadurch gekennzeichnet, daß beide Oberflächen der torischen Linse asphärisch sind.

6. Optisches System nach einem der Ansprüche 1 bis 4, dadurch gekennzeichnet, daß nur die Oberfläche der torischen Linse, die der sphärischen Linse gegenübersteht, asphärisch ist.

7. Optisches System nach einem der Ansprüche 1 bis 6, dadurch gekennzeichnet, daß die sphärische Linse aus einem Glasmaterial hergestellt ist und die torische Linse aus einem Kunststoffmaterial hergestellt ist.

8. Optisches Abtastsystem, umfassend:
   eine Lichtquelleneinheit (1): und
   eine Licht-Ablenkeinrichtung (5) zum Ablenken eines Lichtstrahls von der Lichtquelleneinheit,
   **dadurch gekennzeichnet, daß** es ferner ein optisches Abtastsystem nach einem der Ansprüche 1 bis 7 zum Führen des von der Licht-Ablenkeinrichtung abgelenkten Lichtstrahls zu einer abzutastenden Oberfläche (8) umfaßt.

9. Laserstrahldrucker, umfassend:
   eine Lichtquelleneinheit (1);
   eine Licht-Ablenkeinrichtung (5) zum Ablenken eines Lichtstrahls von der Lichtquelleneinheit; und
   ein Aufzeichnungsmaterial (8);
   **dadurch gekennzeichnet, daß** es ferner ein optisches Abtastsystem nach einem der Ansprüche 1 bis 7 zum Führen des von der Licht-Ablenkeinrichtung abgelenkten Lichtstrahls zu dem Aufzeichnungsmaterial umfaßt.

**Revendications**

1. Système de balayage optique à utiliser dans un dispositif de balayage d'un faisceau lumineux pour dévier un faisceau lumineux par un moyen (5) de déviation afin de balayer un plan (8), et devant être positionné entre ledit moyen de déviation et ledit plan balayé, comportant :
   une lentille sphérique (6, 16, 26) à puissance positive ; et
   une lentille torique (7, 17, 27) positionnée à proximité de ladite lentille sphérique, sur le côté de celle-ci plus proche du plan balayé, et ayant des puissances positives en section transversale des balayages principal et secondaire, caractérisé en ce qu'au moins l'une des faces de ladite lentille torique est asphérique dans le plan de la section transversale de balayage principal ; et
   en ce qu'il satisfait les relations suivantes :
$$0,1 < f_a/f_{2a} < 0,3 \; ;$$
$$0,25 < f_{2b}/f_a < 0,5 \; ;$$
$$0,6 < \ell/f_a < 1 \; ;$$
$$0 < d_{max}/f_{2b} < 0,15,$$
   dans lesquelles $f_{2a}$ est la longueur focale de ladite lentille torique dans le plan de la section transversale du balayage principal, $f_a$ est la longueur focale synthétisée desdites lentilles sphérique et torique dans ledit plan, $f_{2b}$ est la longueur focale de ladite lentille torique dans le plan de la section transversale du balayage secondaire, $\ell$ est la distance entre ladite lentille torique et ledit plan balayé, et $d_{max}$ est l'épaisseur maximale de ladite lentille torique dans la direction de l'axe optique.

2. Système optique selon la revendication 1, caractérisé en ce qu'une face de ladite lentille sphérique plus proche du moyen de déflection est approximativement plane, et une face de ladite lentille sphérique plus proche dudit plan balayé est convexe vers le plan balayé.

3. Système optique selon l'une des revendications 1 et 2, caractérisé en ce que ladite lentille torique présente une forme concentrique avec des centres de rayons de courbure sur son côté proche du moyen de déviation.

4. Système optique selon l'une des revendications 1 à 3, caractérisé en ce que ladite lentille torique est composée d'une matière plastique.

5. Système optique selon l'une des revendications 1 à 4, caractérisé en ce que les deux faces de ladite lentille torique sont asphériques.

6. Système optique selon l'une des revendications 1 à 4, caractérisé en ce que seule la face de ladite lentille torique tournée vers la lentille sphérique est asphérique.

7. Système optique selon l'une des revendications 1 à 6, caractérisé en ce que ladite lentille sphérique est formée d'une matière du type du verre et ladite lentille torique est formée d'une matière plastique.

8. Système de balayage optique comportant :
une unité (1) à source de lumière ; et
un déflecteur (5) de lumière destiné à dévier un faisceau lumineux provenant de ladite unité à source de lumière,
caractérisé en ce qu'il comporte en outre :
un système de balayage optique tel que défini dans l'une quelconque des revendications 1 à 7 pour guider le faisceau lumineux dévié par ledit déflecteur de lumière vers une surface (8) devant être balayée.

9. Imprimante à faisceau laser comportant
une unité (1) à source de lumière ;
un déflecteur (5) de lumière destiné à dévier un faisceau lumineux provenant de ladite unité à source de lumière ; et
un support d'enregistrement (8) ;
caractérisé en ce qu'elle comporte en outre
un système de balayage optique tel que défini dans l'une des revendications (1-7) pour guider le faisceau lumineux dévié par ledit déflecteur de lumière vers ledit support d'enregistrement.

# FIG. 1

FIG. 2

CURVATURE OF FIELD (mm)

—— MERIDIONAL DIRECTION
--- SAGITTAL DIRECTION

-128.5    -1.0    +1.0    128.5

IMAGE HEIGHT (mm)

FIG. 3

Fθ (%)

-128.5    -0.2    +0.2    128.5

IMAGE HEIGHT (mm)

FIG. 4

EP 0 441 350 B1

FIG. 5

FIG. 6